# EUROPEAN PATENT SPECIFICATION

(11) **EP 4 139 595 B1**
(45) Date of publication and mention of the grant of the patent: **07.10.2026**
(21) Application number: 20731254.7
(22) Date of filing: 24.04.2020
(51) Int. Cl.: F16K 15/03, F16K 27/02, F16L 37/14

(54) **VALVE DEVICE WITH BALL LOCKS**
VENTILVORRICHTUNG MIT KUGELVERRIEGELUNG
DISPOSITIF FORMANT VANNE DOTÉ DE VERROUS À BILLES

(43) Date of publication of application: 01.03.2023
(73) Proprietor: Aerojet Rocketdyne, Inc., Melbourne, FL 32901 (US)
(72) Inventor: MEYER, David, Sacramento, California 95813-6000 (US); PADILLA, Mario, Sacramento, California 95813-6000 (US); GRENON, Gary, Sacramento, California 95813-6000 (US)
(74) Representative: Dehns
(86) International application number: PCT/US2020/029762
(87) International publication number: WO 2021/216085

(56) References cited:
- CA-A- 716 470
- DE-B1- 2 902 278
- DE-U1- 202005 003 123
- DE-U1- 9 413 445
- GB-A- 682 591
- US-A- 5 209 262
- US-A1- 2015 028 585

## Description

### BACKGROUND

Check valves are used in fluid ducts to allow fluid flow in only one direction. There are a wide variety of types of check valves, such as ball check valves, diaphragm check valves, flapper check valves, and disc check valves. Often, the check valve is situated in a single valve body that is mounted in-line in the duct. The valve elements, such as the ball, diaphragm, flapper, or disc, as well as associated seals and springs, are assembled into the valve body. DE 9,413,445 discloses a butterfly valve. CA 716,470 discloses a pipe coupling. US 5,209,262 A discloses a valve having a housing composed of multiple parts that are coupled together.

### SUMMARY

A valve device according to the present disclosure is defined in claim 1.

In a further embodiment of any of the foregoing embodiments, one of the first or second valve elements is a flapper and the other of the first or second valve elements is a flapper stop.

In a further embodiment of any of the foregoing embodiments, the flapper includes a spring.

In a further embodiment of any of the foregoing embodiments, the flapper includes a bumper.

In a further embodiment of any of the foregoing embodiments, the fluid through-passage includes a first passage that opens to the male housing, and a second passage that opens to the female housing.

In a further embodiment of any of the foregoing embodiments, the first and second passages are non-coaxial.

In a further embodiment of any of the foregoing embodiments, the exterior and interior channels are each semi-circular in cross-section.

In a further embodiment of any of the foregoing embodiments, the female housing includes a ball lock port that opens to the interior channel.

In a further embodiment of any of the foregoing embodiments, the female housing is less than two inches (5.08 cm) in diameter and the toroidal tube includes at least 80 of the ball locks.

A further embodiment of any of the foregoing embodiments includes at least one seal between the male housing and the female housing.

In a further embodiment of any of the foregoing embodiments, the lock includes a lock pin.

A method of assembling a valve device according to the present disclosure is defined in claim 11.

In a further embodiment of any of the foregoing embodiments, one of the first or second valve elements is a flapper and the other of the first or second valve elements is a flapper stop.

In a further embodiment of any of the foregoing embodiments, the flapper includes a spring.

In a further embodiment of any of the foregoing embodiments, the lock includes a lock pin, and the engaging includes inserting the lock pin into aligned lock channels in the male and female housings.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example valve device.
Figure 2 illustrates a sectioned view of the valve device of Figure 1.
Figure 3 illustrates an axial sectioned view of the valve device and ball locks.

### DETAILED DESCRIPTION

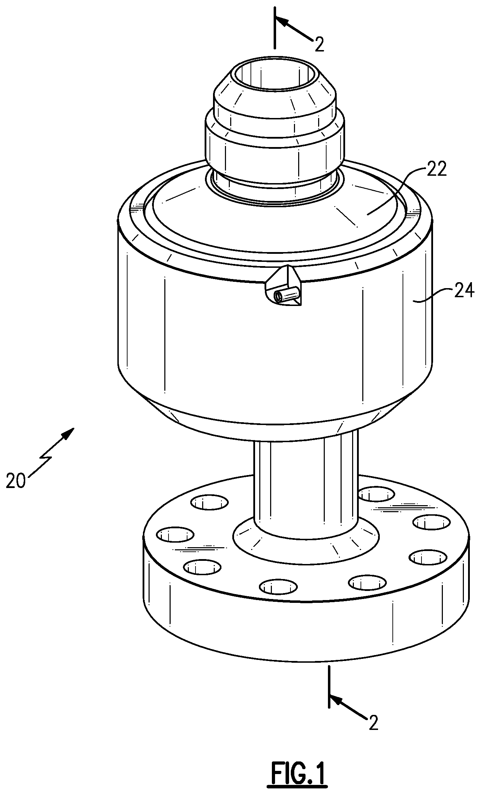

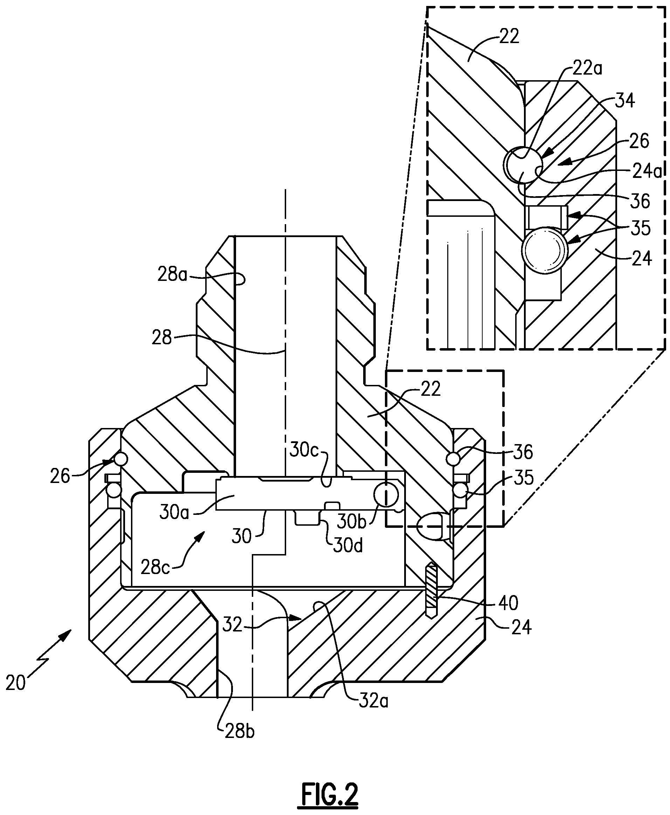

Figure 1 schematically illustrates a valve device 20, and Figure 2 illustrates a sectioned view of the valve device 20. The valve device 20 is a check valve and will be described herein as a flapper type of check valve. It is to be understood, however, that the examples herein may also be of benefit to other types of check valves.

In general, the valve device 20 has a two-piece body that includes male and female housings 22/24 that are secured together in a ball joint 26. The male and female housings 22/24 are generally cylindrical and are of complementary geometry such that the male housing 22 nests in the female housing 24. The male and female housings 22/24 may be formed of a relatively strong material, such as a metal or metal alloy. In one example, each of the male and female housings 22/24 are of single-piece, monolithic construction.

The male and female housings 22/24 together define a fluid through-passage 28. In this example, the fluid through-passage 28 includes a first or inlet passage 28a that opens to the open interior region of the male housing 22, a second or outlet passage 28b that opens to the open interior region of the female housing 24, and an intermediate passage 28c through the intersecting open interior regions of the male and female housings 22/24. As shown, each of the first and second passages 28a/28b are straight along their central axes but are non-coaxial with one another.

The valve device 20 further includes first and second valve elements 30/32 disposed, respectively, in the male and female housings 22/24. In the example shown, the first valve element 30 is a flapper 30a, and the second valve element 32 is a flapper stop 32a. The terminology "first" and "second" as used herein is to differentiate that there are two architecturally distinct components or features. The flapper 30a may comprise a gate or disc that is pivotably mounted on a pin in the male housing 22, with a bias spring 30b that biases the flapper 30a to a closed position against valve seat 30c. The bias spring 30b has a spring constant that is selected to provide a desired opening pressure at which fluid moves the flapper 30a off of the valve seat 30c to permit fluid through-flow. It is to be understood that the terms "first" and "second" are interchangeable in the embodiments herein in that a first component or feature could alternatively be termed as the second component or feature, and vice versa. For example, the flapper 30a may alternatively be in the female housing 24 and the flapper stop 32a in the male housing 22.

The flapper stop 32a is situated in the pivot path of the flapper 30a and limits the stroke of the flapper 30a, thereby defining the maximum flow area through the fluid through-passage 28. For instance, the flapper stop 32a is a surface that is integrally formed with the female housing 24 and is complementarily situated or oriented with respect to the flapper 30a to stop movement thereof. In this regard, the flapper 30a, the flapper stop 32a, or both may have bumpers or the like that serve as the contact location between the flapper 30a and the flapper stop 32a. In the example shown, the flapper 30a includes a bumper 30d that contacts the flapper stop 32a at full opening of the flapper 30a. The bumper 30d may facilitate limiting contact to a relatively small defined area on the flapper stop 32a. As will be appreciated, the flapper stop 32a may also have a like bumper, or the bumper 30d may alternatively be on the flapper stop 32a.

As best shown in the inset in Figure 2, the male housing 22 has an exterior annular channel 22a and the female housing 24 has an interior annular channel 24a. When nested, the annular channels 22a/24a align and generally form a toroidal tube 34. In the illustrated example, the annular channels 22a/24a are each semi-circular such that the toroidal tube 34 has a circular cross-section. As will be appreciated, since the male and female housings 22/24 are slip-fit together, there may be play between the housings 22/2 such that the channels 22a/24a do not perfectly align. In this regard, the toroidal tube 34 itself is not sealed and may not be perfectly circular in cross-section. For high-pressure implementations, the valve device 20 may also include one or more annular seals 35, such as o-rings.

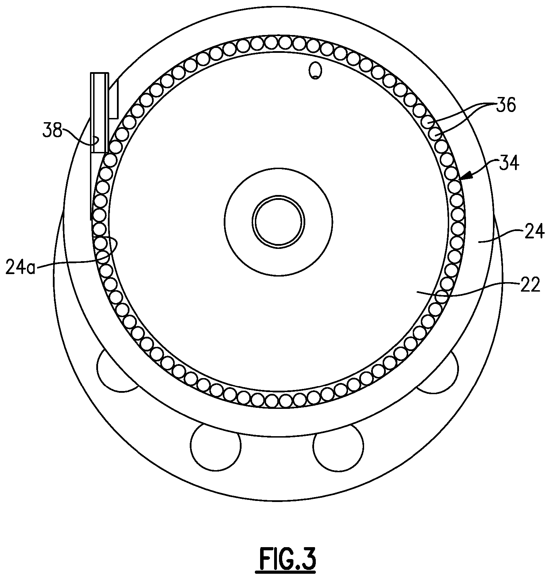

Ball locks 36 are received into the toroidal tube 34. Each ball lock 36 is a spherical body that is marginally smaller in diameter than the diameter of the cross-section of the toroidal tube 34. In one example shown in a sectioned view through the toroidal tube 34 in Figure 3, the ball locks 36 are inserted into the toroidal tube 34 via a ball lock port 38 in the female housing 24 that opens to the interior channel 24a. After insertion of the ball locks 36 into the toroidal tube 34, the port may be closed off using a closure 37, such as a pin, plug, threaded screw, or the like.

Once in the toroidal tube 34, each ball lock 36 is approximately half in the annular channel 22a and half in the annular channel 24a. Relative movement along the axis of one or the other of the male or female housings 22/24 generates a shear force along the interface between the annular channels 22a/24a. But for the ball locks 36, the male and female housings 22/24 would slide apart due to such shear. Due to the relatively tight packing of the ball locks 36 in the toroidal tube 34, however, the ball locks 36 are unable to move fully into either of the channels 22a/24a to be clear of the shear. The shear is thus borne by the ball locks 36, but since the ball locks 36 are constrained in the toroidal tube 34 the ball locks 36 do not permit the shear movement between the male and female housings 22/24. The ball locks 36 thereby axially lock the male and female housings 22/24 together.

In these regards, the ball locks 36 may be selected for relative strength and may be made of metal or metal alloy, such as steel for example. The ball locks 36 are also packed tightly into the toroidal tube 34 such that the ball locks 36 form a continuous line of ball-to-ball contact. There may be a relatively small amount of play in the ball locks 36 to permit the last ball lock 36 to fit into the line. Such a line of contact may facilitate more uniform load distribution in comparison to using fewer ball locks, for example ball locks that are spaced apart by one or more ball diameters. The ball locks 36 also facilitate a relatively small size of the valve device 20, which find use in high pressure implementations such as those on the order of 10 ksi (69 MPa) or higher. For example, the female housing 24 is less than two inches (5.08 cm) in diameter.
Even at the low radius of curvature of the toroidal tube 34 for such as diameter, the ball locks 36 can readily roll in the toroidal tube 34 to facilitate insertion. As comparison, at the same radius of curvature, a metal wire lock member of similar diameter as the ball locks was unable to be inserted all the way around the tube due to wire stiffness and friction with the sides of the tube.

The ball locks 36 would permit rotational adjustment between the male and female housings 22/24 except for a rotational lock 40 (Figure 2). To bring the first and second valve elements 30/32 into functional alignment, the male and female housings 22/24 are aligned during assembly (e.g., manually) relative to one another using the lock 40. In the illustrated example, the lock 40 is a pin lock in which the male and female housings 22/24 each include pin holes. Once engaged, the complementary pin prevents relative rotation between the male and female housings 22/24. The alignment of the pin holes may thus be indicative of proper functional alignment. The term "functional alignment" or variations thereof refers to alignment between the first and second valve elements 30/32 which permits the first and second valve elements 30/32 to function as designed.

As an example, in a functionally aligned state, the first and second valve elements 30/32 operate without interference and provide a predetermined design flow area through the fluid through-passage 28. In the example of the flapper 30a and flapper stop 32a, rotational misalignment between the male and female housings 22/24 may lead to a functional misalignment of contact regions between the flapper 30a and the flapper stop 32a that alters a predetermined design flow area to be outside of a target flow area range. While such variations in flow area from misalignment may be tolerable in some general purpose check valves, relatively small, high precision, high flow, and/or high pressure check valves may require precise flow areas and thus precise alignment. Such precise alignment may be challenging to achieve with other types of joints than with the ball joint 26. For instance, in a further example of the examples above, the female housing 24 is less than two inches (5.08 cm) in diameter and the
toroidal tube 34 includes at least 80 of the ball locks 36. Moreover, as the ball locks 36 can be readily inserted and removed from the toroidal tube 34 via the ball lock port 38, the valve device 20 can relatively rapidly be assembled and disassembled, repeatedly if needed. Additionally, since the rotational adjustment is transient, and is prevented when the valve device 20 is in operation as a check valve, there is no need for the channels 22a/24a to be surface hardened (e.g., carburized) as in a bearing application.

The examples above also embody a method of assembling the valve device 20. For example, the method includes providing the male and female housings 22/24, inserting the male housing 22 into the female housing 24 such that the exterior and interior annular channels 22a/22b together define the toroidal tube 34, inserting the ball locks 36 into the toroidal tube 34 to axially lock the male and female housings 22/24 together, and engaging the lock 40 when the first and second valve elements 30/32 are in functional alignment so as to rotationally lock the male and female housings 22/24 together.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A valve device (20) comprising:
male and female housings (22, 24) having, respectively, exterior and interior annular channels (22a, 24a), the male housing (22) receivable into the female housing (24) such that the exterior and interior annular channels (22a, 24a) together define a toroidal tube (34), and the male and female housings (22, 24) together define a fluid through-passage (28);
first and second valve elements (30, 32) disposed, respectively, in the male and female housings (22, 24);
ball locks (36) receivable into the toroidal tube (34), the ball locks (36) axially locking the male and female housings (22, 24) together; and
a lock (40) engageable when the first and second valve elements (30, 32) are in functional alignment and which when engaged rotationally locks the male and female housings (22, 24),
wherein the ball locks (36) form a continuous line of ball-to-ball contact.

2. The valve device (20) as recited in claim 1, wherein one of the first or second valve elements (30, 32) is a flapper (30a) and the other of the first or second valve elements (30, 32) is a flapper stop (32a).

3. The valve device (20) as recited in claim 2, wherein the flapper (30a) includes a spring or a bumper (30d).

4. The valve device (20) as recited in any preceding claim, wherein the fluid through-passage (28) includes a first passage (28a) that opens to the male housing (22), and a second passage (28b) that opens to the female housing (24).

5. The valve device (20) as recited in claim 4, wherein the first and second passages (28a, 28b) are non-coaxial.

6. The valve device (20) as recited in any preceding claim, wherein the exterior and interior channels (22a, 24a) are each semi-circular in cross-section.

7. The valve device (20) as recited in any preceding claim, wherein the female housing (24) includes a ball lock port (38) that opens to the interior channel (24a).

8. The valve device (20) as recited in any preceding claim, wherein the female housing (24) is less than two inches in diameter and the toroidal tube (34) includes at least 80 of the ball locks (36).

9. The valve device (20) as recited in any preceding claim, further comprising at least one seal between the male housing (22) and the female housing (24).

10. The valve device (20) as recited in any preceding claim, wherein the lock (40) includes a lock pin.

11. A method of assembling a valve device (20), the method comprising:
providing male and female housings (22, 24) that have, respectively, exterior and interior annular channels (22a, 24a), and first and second valve elements (30, 32) disposed, respectively, in the male and female housings (22, 24);
inserting the male housing (22) into the female housing (24) such that the exterior and interior annular channels (22a, 24a) together define a toroidal tube (34), and the male and female housings (22, 24) together define a fluid through-passage (28);
engaging a lock (40) when the first and second valve elements (30, 32) are in functional alignment, the lock (40) rotationally locks the male and female housings (22, 24); and
inserting ball locks (36) into the toroidal tube (34), the ball locks (36) axially lock the male and female housings (22, 24) together,
wherein the ball locks (36) form a continuous line of ball-to-ball contact.

12. The method as recited in claim 11, wherein one of the first or second valve elements (30, 32) is a flapper (30a) and the other of the first or second valve elements (30, 32) is a flapper stop (32a).

13. The method as recited in claim 12, wherein the flapper (30a) includes a spring.

14. The method as recited in claim 11, 12, or 13, wherein the lock (40) includes a lock pin, and the engaging includes inserting the lock pin into aligned lock channels in the male and female housings (22, 24).

## Patentansprüche

1. Ventilvorrichtung (20), umfassend:
Stecker- und Buchsengehäuse (22, 24), die jeweils ringförmige Außen- und Innenkanäle (22a, 24a) aufweisen, wobei das Steckergehäuse (22) im Buchsengehäuse (24) so aufgenommen werden kann, dass die ringförmigen Außen- und Innenkanäle (22a, 24a) zusammen ein ringförmiges Rohr (34) definieren und die Stecker- und Buchsengehäuse (22, 24) zusammen einen Fluiddurchgang (28) definieren;
erste und zweite Ventilelemente (30, 32), die jeweils in dem Stecker- und Buchsengehäuse (22, 24) angeordnet sind;
Kugelverriegelungen (36), die im ringförmigen Rohr (34) aufgenommen werden können, wobei die Kugelverriegelungen (36) das Stecker- und Buchsengehäuse (22, 24) zusammen axial verriegeln; und
eine Verriegelung (40), in die eingegriffen werden kann, wenn das erste und zweite Ventilelement (30, 32) in funktioneller Ausrichtung sind, und die, wenn sie eingegriffen sind, das Stecker- und Buchsengehäuse (22, 24) in Drehungsrichtung verriegeln,
wobei die Kugelverriegelungen (36) eine durchgehende Linie von Kugel-zu-Kugel-Kontakt bilden.

2. Ventilvorrichtung (20) nach Anspruch 1, wobei eines des ersten oder zweiten Ventilelements (30, 32) eine Klappe (30a) ist und das andere des ersten oder zweiten Ventilelements (30, 32) ein Klappenanschlag (32a) ist.

3. Ventilvorrichtung (20) nach Anspruch 2, wobei die Klappe (30a) eine Feder oder einen Puffer (30d) einschließt.

4. Ventilvorrichtung (20) nach einem vorstehenden Anspruch, wobei der Fluiddurchgang (28) einen ersten Durchgang (28a), der sich zum Steckergehäuse (22) öffnet, und einen zweiten Durchgang (28b), der sich zum Buchsengehäuse (24) öffnet, einschließt.

5. Ventilvorrichtung (20) nach Anspruch 4, wobei der erste und zweite Durchgang (28a, 28b) nicht koaxial sind.

6. Ventilvorrichtung (20) nach einem vorstehenden Anspruch, wobei die Außen- und Innenkanäle (22a, 24a) jeweils im Querschnitt halbkreisförmig sind.

7. Ventilvorrichtung (20) nach einem vorstehenden Anspruch, wobei das Buchsengehäuse (24) einen Kugelverriegelungsanschluss (38) einschließt, der sich zum Innenkanal (24a) öffnet.

8. Ventilvorrichtung (20) nach einem vorstehenden Anspruch, wobei das Buchsengehäuse (24) im Durchmesser weniger als zwei Zoll ist und das ringförmige Rohr (34) mindestens 80 der Kugelverriegelungen (36) einschließt.

9. Ventilvorrichtung (20) nach einem vorstehenden Anspruch, weiter umfassend mindestens eine Dichtung zwischen dem Steckergehäuse (22) und dem Buchsengehäuse (24).

10. Ventilvorrichtung (20) nach einem vorstehenden Anspruch, wobei die Verriegelung (40) einen Verriegelungsstift einschließt.

11. Verfahren zum Zusammensetzen einer Ventilvorrichtung (20), wobei das Verfahren Folgendes umfasst:
Bereitstellen von Stecker- und Buchsengehäusen (22, 24), die jeweils ringförmige Außen- und Innenkanäle (22a, 24a) und erste und zweite Ventilelemente (30, 32) aufweisen, die jeweils in dem Stecker- und Buchsengehäuse (22, 24) angeordnet sind;
Einsetzen des Steckergehäuses (22) in das Buchsengehäuse (24) so, dass die ringförmigen Außen- und Innenkanäle (22a, 24a) zusammen ein ringförmiges Rohr (34) definieren und das Stecker- und Buchsengehäuse (22, 24) zusammen einen Fluiddurchgang (28) definieren;
Eingreifen einer Verriegelung (40), wenn sich das erste und zweite Ventilelement (30, 32) in funktioneller Ausrichtung befinden, wobei die Verriegelung (40) die Stecker- und Buchsengehäuse (22, 24) in Drehungsrichtung verriegelt; und
Einsetzen von Kugelverriegelungen (36) in das ringförmige Rohr (34), wobei die Kugelverriegelungen (36) das Stecker- und Buchsengehäuse (22, 24) zusammen axial verriegeln,
wobei die Kugelverriegelungen (36) eine durchgehende Linie von Kugel-zu-Kugel-Kontakt bilden.

12. Verfahren nach Anspruch 11, wobei eines des ersten oder zweiten Ventilelements (30, 32) eine Klappe (30a) ist und das andere des ersten oder zweiten Ventilelements (30, 32) ein Klappenanschlag (32a) ist.

13. Verfahren nach Anspruch 12, wobei die Klappe (30a) eine Feder einschließt.

14. Verfahren nach Anspruch 11, 12 oder 13, wobei die Verriegelung (40) einen Verriegelungsstift einschließt und das Eingreifen Einsetzen des Verriegelungsstifts in ausgerichtete Verriegelungskanäle im Stecker- und Buchsengehäuse (22, 24) einschließt.

## Revendications

1. Dispositif formant vanne (20) comprenant :
des boîtiers mâle et femelle (22, 24) présentant, respectivement, des canaux annulaires extérieur et intérieur (22a, 24a), le boîtier mâle (22) pouvant être reçu dans le boîtier femelle (24) de sorte que les canaux annulaires extérieur et intérieur (22a, 24a) définissent ensemble un tube toroïdal (34), et les boîtiers mâle et femelle (22, 24) définissent ensemble un passage traversant de fluide (28) ;
des premier et deuxième éléments de vanne (30, 32) disposés, respectivement, dans les boîtiers mâle et femelle (22, 24) ;
des verrous à billes (36) pouvant être reçus dans le tube toroïdal (34), les verrous à billes (36) verrouillant axialement ensemble les boîtiers mâle et femelle (22, 24) ; et
un verrou (40) pouvant être engagé lorsque les premier et deuxième éléments de vanne (30, 32) sont en alignement fonctionnel et qui, lorsqu'il est engagé, verrouille en rotation les boîtiers mâle et femelle (22, 24),
dans lequel les verrous à billes (36) forment une ligne continue de contact bille à bille.

2. Dispositif formant vanne (20) selon la revendication 1, dans lequel l'un des premier ou deuxième éléments de vanne (30, 32) est un clapet (30a) et l'autre des premier ou deuxième éléments de vanne (30, 32) est une butée de clapet (32a).

3. Dispositif formant vanne (20) selon la revendication 2, dans lequel le clapet (30a) inclut un ressort ou un amortisseur (30d).

4. Dispositif formant vanne (20) selon l'une quelconque des revendications précédentes, dans lequel le passage traversant de fluide (28) inclut un premier passage (28a) qui s'ouvre vers le boîtier mâle (22), et un deuxième passage (28b) qui s'ouvre vers le boîtier femelle (24).

5. Dispositif formant vanne (20) selon la revendication 4, dans lequel les premier et deuxième passages (28a, 28b) ne sont pas coaxiaux.

6. Dispositif formant vanne (20) selon l'une quelconque des revendications précédentes, dans lequel les canaux extérieur et intérieur (22a, 24a) sont chacun semi-circulaires en section transversale.

7. Dispositif formant vanne (20) selon l'une quelconque des revendications précédentes, dans lequel le boîtier femelle (24) inclut un orifice de verrous à billes (38) qui s'ouvre vers le canal intérieur (24a).

8. Dispositif formant vanne (20) selon l'une quelconque des revendications précédentes, dans lequel le boîtier femelle (24) présente un diamètre inférieur à deux pouces et le tube toroïdal (34) inclut au moins 80 des verrous à billes (36).

9. Dispositif formant vanne (20) selon l'une quelconque des revendications précédentes, comprenant en outre au moins un joint entre le boîtier mâle (22) et le boîtier femelle (24).

10. Dispositif formant vanne (20) selon l'une quelconque des revendications précédentes, dans lequel le verrou (40) inclut une goupille de verrouillage.

11. Procédé d'assemblage d'un dispositif formant vanne (20), le procédé comprenant :
fournir des boîtiers mâle et femelle (22, 24) qui présentent, respectivement, des canaux annulaires extérieur et intérieur (22a, 24a), et des premier et deuxième éléments de vanne (30, 32) disposés, respectivement, dans les boîtiers mâle et femelle (22, 24) ;
insérer le boîtier mâle (22) dans le boîtier femelle (24) de sorte que les canaux annulaires extérieur et intérieur (22a, 24a) définissent ensemble un tube toroïdal (34), et les boîtiers mâle et femelle (22, 24) définissent ensemble un passage traversant de fluide (28) ;
engager un verrou (40) lorsque les premier et deuxième éléments de vanne (30, 32) sont en alignement fonctionnel, le verrou (40) verrouillant en rotation les boîtiers mâle et femelle (22, 24) ; et
insérer des verrous à billes (36) dans le tube toroïdal (34), les verrous à billes (36) verrouillant axialement ensemble les boîtiers mâle et femelle (22, 24),
dans lequel les verrous à billes (36) forment une ligne continue de contact bille à bille.

12. Procédé selon la revendication 11, dans lequel l'un des premier ou deuxième éléments de vanne (30, 32) est un clapet (30a) et l'autre des premier ou deuxième éléments de vanne (30, 32) est une butée de clapet (32a).

13. Procédé selon la revendication 12, dans lequel le clapet (30a) inclut un ressort.

14. Procédé selon la revendication 11, la revendication 12, ou la revendication 13, dans lequel le verrou (40) inclut une goupille de verrouillage, et l'engagement inclut une insertion de la goupille de verrouillage dans des canaux de verrouillage alignés dans les boîtiers mâle et femelle (22, 24).
